# EUROPÄISCHE PATENTSCHRIFT

(11) **EP 3 569 458 B1**
(45) Veröffentlichungstag und Bekanntmachung des Hinweises auf die Patenterteilung: **27.09.2023**
(21) Anmeldenummer: 19165724.6
(22) Anmeldetag: 28.03.2019
(51) Int. Cl.: B60T 8/17, B60T 8/18, B60T 13/66

(54) **VERFAHREN ZUM BETREIBEN EINES BREMSSYSTEMS EINES LANDWIRTSCHAFTLICHEN ZUGES, BREMSSYSTEM FÜR EINEN LANDWIRTSCHAFTLICHEN ZUG SOWIE LANDWIRTSCHAFTLICHER ZUG**
AGRICULTURAL TRAIN, BRAKE SYSTEM FOR AN AGRICULTURAL TRAIN AND METHOD FOR OPERATING A BRAKE SYSTEM OF AN AGRICULTURAL TRAIN
PROCÉDÉ DE FONCTIONNEMENT D'UN SYSTÈME DE FREINAGE D'UN TRACTEUR AGRICOLE, SYSTÈME DE FREINAGE POUR UN TRACTEUR AGRICOLE AINSI QUE TRACTEUR AGRICOLE

(30) Priorität: 15.05.2018 DE 102018111661
(43) Veröffentlichungstag der Anmeldung: 20.11.2019
(73) Patentinhaber: CLAAS Tractor S.A.S., 78141 Vélizy-Villacoublay Cedex (FR)
(72) Erfinder: Roger, Fabien, 75019 Paris (FR); De Branche, Basile, 92100 Bouligne Billancourt (FR)
(74) Vertreter: CLAAS Gruppe

(56) Entgegenhaltungen:
- DE-A1- 4 438 017
- DE-A1- 4 438 252
- DE-A1-102014 220 686
- DE-C1- 4 446 358

## Beschreibung

Die vorliegende Erfindung betrifft ein Verfahren zum Betreiben eines landwirtschaftlichen Zuges gemäß dem Oberbegriff des Anspruches 1. Weiterhin betrifft die Erfindung einen landwirtschaftlichen Zug gemäß dem Oberbegriff des Anspruches 9.

Landwirtschaftliche Arbeitsmaschinen wie Traktoren werden neben der reinen Feldarbeit, bei welcher unter anderem eine an das Zugfahrzeug gekoppelte, auswechselbare Arbeitsvorrichtung gezogen wird, auch oft für Transportaufgaben als Zugfahrzeug eingesetzt, bei denen beispielsweise auf Anhänger verladenes Erntegut transportiert wird. Dabei werden üblicherweise ein oder mehrere Anhänger von einem Zugfahrzeug gezogen und bilden zusammen mit dem Zugfahrzeug einen sogenannten landwirtschaftlichen Zug. Mit der zunehmenden Große und Leistungsfähigkeit der landwirtschaftlichen Arbeitsmaschinen steigt auch die Möglichkeit, größere und schwerer beladene Anhänger zu ziehen, wobei die zulässigen Höchstgeschwindigkeiten, die landwirtschaftliche Arbeitsmaschinen im öffentlichen Straßenverkehr fahren dürfen, ebenfalls ansteigen. Anhänger weisen oftmals eine eigene Bremsvorrichtung auf, welche als mechanische, hydraulische, pneumatische und/oder als elektrisch wirkende Bremsvorrichtung auf eine oder mehrere Achsen des Anhängers wirkt. Bei einer Auflaufbremse wird bei einem Auflaufen des Anhängers auf das Zugfahrzeug, also bei einer Verzögerung des Zugfahrzeugs, automatisch die Bremsvorrichtung des auflaufenden Anhängers betätigt, so dass dieser durch die anhängerseitige Bremsvorrichtung ebenfalls verzögert wird. Hierbei kann es bauartbedingt jedoch zu kurzen zeitlichen Verzögerungen bis zum Ansprechen der Auflaufbremse kommen, wodurch kritische Fahrsituationen entstehen können. So kann beispielsweise ein stark bremsendes Zugfahrzeug bis zum Ansprechen der Auflaufbremse des Anhängers durch diesen geschoben und bereits in einen instabilen Fahrzustand gebracht werden (z.B. Einknicken des Zuges, sog. "Jackknifing"). Eine vergleichbare kritische Fahrsituation kann auftreten, wenn das Zugfahrzeug eine pneumatische Bremsvorrichtung des Anhängers ansteuert, wobei deren Betätigung von der Betätigung der Betriebsbremse der Arbeitsmaschine abhängig ist.

Das zuvor Gesagte gilt nicht nur für mit beispielsweise Erntegut beladbare Anhänger, sondern auch gezogene und somit zu bremsende landwirtschaftliche Arbeitsaggregate wie Ballenpressen, Ackerbearbeitungsaggregate, aufgesattelte Pflanzenschutzgeräte oder dergleichen, die vorliegend ebenfalls Anhänger im vorschlagsgemäßen Sinne bilden.

Die Bremsvorrichtung einer gezogenen Arbeitsvorrichtung weist eine Grundeinstellung auf, die bestimmte gesetzliche Regularien erfüllen muss. Die gesetzlichen Regularien definieren Bereiche innerhalb derer der Verlauf der Verzögerung der Arbeitsvorrichtung in Abhängigkeit vom Bremsdruck sich bewegen darf. Die Bereiche werden dabei für Zugfahrzeuge unterschiedlichen Grundgewichts jeweils ohne und mit maximaler Gewichtsbelastung festgelegt. Somit werden der Arbeitsvorrichtung Bremsparameter vorgegeben, die sowohl für leichtere als auch schwerere Arbeitsmaschinen verwendet werden. Dies führt bei einem unterschiedlichen Gewicht der Arbeitsmaschine zu einem spürbar unterschiedlichen Ansprechverhalten des Bremssystems. Besonders auffällig ist dies bei einem Betrieb der Arbeitsmaschine als Zugfahrzeug eines landwirtschaftlichen Zuges, wo beispielsweise bei einer leichteren Arbeitsmaschine als Zugfahrzeug der Bremsdruck niedriger ist als der der Arbeitsvorrichtung und es daher beim Bremsen des Zuges zu einer höheren Bremsbelastung mit einem erhöhten Verschleiß kommen kann.

Aus dem Stand der Technik sind unterschiedliche Bremseinrichtungen für landwirtschaftliche Züge bekannt. Aus der DE 10 2014 220 686 A1 ist beispielsweise bekannt, bei einer Bremsbetätigung eine anhängerseitige Achse derart zu bremsen, dass ein Verzögerungs-Sollwert erreicht wird, der einem Verzögerungswert des Zugfahrzeugs ohne Anhänger bei einer entsprechenden Bremsbetätigung entspricht. Nachteilig ist hierbei jedoch, dass für einen zuverlässigen Betrieb eine aufwändige Elektronik und Sensorik notwendig ist, die beispielsweise aus Kostengründen oder aufgrund der zu erfüllenden Arbeitsvorgänge nicht bei jeder landwirtschaftlichen Arbeitsmaschine eingerüstet ist.

Aus der DE 44 46 358 C1 ist ein Verfahren zum Einstellen der Bremskraftaufteilung zwischen einem Zugfahrzeug und einem Anhänger, die einen Fahrzeugverbund bilden, in Abhängigkeit vom Gewicht des Anhängers bekannt. Dazu wird zur Bestimmung der Masse des Fahrzeugverbundes zu drei verschiedenen Zeitpunkten unter Berücksichtigung von Hangneigungswinkel, aktueller Getriebeübersetzung, Fahrzeuggeschwindigkeit und Fahrzeugbeschleunigung eine Ermittlung der Gesamtenergie im jeweiligen Zeitpunkt durchgeführt. Aus der durch Messungen bzw. Ableitungen bestimmten Gesamtenergie wird die Masse des Fahrzeugverbundes bestimmt. Durch Subtraktion der bekannten Masse des Zugfahrzeugs von bestimmten Masse des Fahrzeugverbundes wird auf die Masse des Anhängers geschlossen und in Abhängigkeit von der Masse des Anhängers wird die Bremskraftaufteilung eingestellt.

Die DE 44 38 252 A1 beschreibt ein Verfahren zur elektronischen Steuerung der Bremsanlage eines einen mit einem Anhänger koppelbaren Zugfahrzeugs, welches eine elektronisch geregelte Bremsanlage aufweist, wobei auf der Basis eines Fahrerbremswunsches ein Bremssignal ermittelt und an den Anhänger zur Betätigung von dessen Bremsanlage übermittelt wird.

Aus der DE 44 38 017 A1 ist ein Verfahren und eine Vorrichtung zur elektrischen Steuerung der Bremsanlage eines Fahrzeugs bekannt.

Der Erfindung liegt die Aufgabe zugrunde, ein Verfahren zum Betreiben eines landwirtschaftlichen Zuges sowie einen landwirtschaftlichen Zug der eingangs genannten Art weiterzubilden, so dass auf einfachere Weise kritische Fahrsituationen aufgrund eines abweichenden Bremsverhaltens von Zugfahrzeug und gezogener Arbeitsvorrichtung vermieden werden können. Insbesondere soll ein zuverlässiger Betrieb ohne aufwändige Sensorik und Auswerteelektronik ermöglicht werden.

Diese Aufgabe wird erfindungsgemäß durch ein Verfahren gemäß den Merkmalen des Anspruches 1 gelöst. Weiterhin wird die Aufgabe durch einen landwirtschaftlichen Zug mit den Merkmalen des Anspruches 9 gelöst.

Vorteilhafte Weiterbildungen sind Gegenstand der jeweiligen Unteransprüche.

Gemäß dem Anspruch 1 wird ein Verfahren zum Betreiben eines landwirtschaftlichen Zuges mit einem Bremssystem vorgeschlagen, wobei der landwirtschaftliche Zug ein Zugfahrzeug, insbesondere einen Traktor, aufweist, wobei das Zugfahrzeug zumindest ein Bodeneingriffsmittel umfasst, durch welches eine von zumindest einer Bremsvorrichtung des Bremssystems hervorgerufene Bremskraft übertragen wird, und einer an das Zugfahrzeug ankoppelbaren oder angekoppelten Arbeitsvorrichtung mit einer Bremsvorrichtung, wobei die Arbeitsvorrichtung als mindestens ein Anhänger oder als mindestens ein Arbeitsaggregat ausgebildet ist, die von dem Zugfahrzeug gezogen und mittelbar verzögert wird. Dabei wird unter mittelbarer Verzögerung die Ansteuerung der Bremsvorrichtung der Arbeitsvorrichtung durch das Zugfahrzeug verstanden.

Erfindungsgemäß ist vorgehen, dass Bremsparameter der zumindest einen Betriebsbremse des Zugfahrzeugs in Abhängigkeit von einem ermittelten individuellen Grundgewicht des Zugfahrzeugs vorgegeben und in einem Steuergerät des Bremssystems hinterlegt werden, wobei diese Bremsparameter bei einem Abbremsen des landwirtschaftlichen Zuges zugrunde gelegt werden. Erfindungsgemäß werden durch das Verfahren für das jeweilige Zugfahrzeug eines Zuges individuelle gewichtsspezifische Bremsparameter für das Ansteuern der Betriebsbremse bestimmt und vorgegeben, die insbesondere zur Ansteuerung der Bremsvorrichtung der Arbeitsvorrichtung verwendet werden. Durch das erfindungsgemäße Verfahren werden das Ansprechverhalten der Betriebsbremse und einer weiteren Bremsvorrichtung individuell aufeinander abgestimmt, so dass die Betriebsbremse des Zugfahrzeugs einen geringeren Verschleiß aufweist. Dabei wird auf eine aufwändige Sensorik und Auswerteelektronik verzichtet, da die Ansteuerung der Bremsvorrichtung auf der Grundlage der hinterlegten Bremsparameter der Betriebsbremse erfolgt. Zudem wird durch das aufeinander abgestimmte Ansprechverhalten der Fahrkomfort verbessert. Bevorzugt ist das Steuergerät dem Zugfahrzeug zugeordnet.

Erfindungsgemäß werden die Bremsparameter aufgrund eines initial durchgeführten Wiegevorganges zum Abschluss eines Fertigungsprozesses des Zugfahrzeugs bestimmt und in einer Speichervorrichtung des Steuergerätes hinterlegt. Dies hat den Vorteil, dass Zugfahrzeuge einer gleichen Baureihe, jedoch mit unterschiedlichem Grundgewicht, mit individuell auf das Grundgewicht abgestimmten Bremsparametern ausgestattet werden, die entsprechend zur Ansteuerung des landwirtschaftlichen Zuges verwendet werden. Das Grundgewicht eines Zugfahrzeugs einer gleichen Baureihe kann aufgrund des Ausstattungsgrades voneinander abweichen. Zum Ausstattungsgrad einer Baureihe zählen unter anderem unterschiedliche Motorisierungen aber auch optional wählbare Zusatzaustattungen, die während des Fertigungsprozesses an dem Zugfahrzeug montiert werden und dadurch in Summe zu einer signifikanten Erhöhung des Grundgewichts führen.

Dabei wird durch das Steuergerät nach initialer Hinterlegung der Bremsparameter zyklisch zu einer Überprüfung der Bremsparameter aufgefordert. Diese Aufforderung kann beispielsweise bei jeder Inbetriebnahme des Zugfahrzeugs erfolgen, um eine etwaig stattgefundene Änderung des Grundgewichts nach einem Um- oder Aufrüsten, beispielsweise durch die Anbringung von Ballastgewichten oder anderen Anbaugeräten, berücksichtigen zu können.

In bevorzugter Weiterbildung kann eine Aktualisierung der Bremsparameter manuell durch einen Benutzereingriff durchgeführt werden. Anlass hierfür kann eine Auf- oder Umrüstung des Zugfahrzeuges oder der Arbeitsvorrichtung sein, welche zu einer Gewichtsveränderung führt. Beispielhaft für eine Aufrüstung hierfür sei der Anbau eines oder mehrerer Ballastgewichte genannt. Denkbar ist auch, dass bei einer Veränderung der Arbeitsvorrichtung durch den Ersatz einer älteren Arbeitsvorrichtung durch eine neue Arbeitsvorrichtung mit höherem Gewicht eine manuelle Aktualisierung der Bremsparameter durchgeführt wird.

Alternativ oder zusätzlich kann eine automatische Aktualisierung der Bremsparameter zyklisch durch das Steuergerät durchgeführt werden.

Weiterhin kann während des laufenden Betriebs des Zugfahrzeugs von dem Steuergerät ein adaptiver Zyklus zur Aktualisierung vorgegeben werden, dessen Taktung eine Berücksichtigung einer kontinuierlichen Gewichtsveränderung während eines Arbeitsprozesses ermöglicht. Neben Gewichtsveränderungen, die auf das Um- oder Aufrüsten des Zugfahrzeugs zurückzuführen sein können, kommt es im laufenden Betrieb des Zufahrzeugs zu Gewichtsänderungen, die auf Veränderungen verschiedener Maschinenparameter beruhen. Maschinenparameter können mitgeführte Betriebs- und/oder Arbeitsstoffe wie Kraftstoff, Saatgut, Dünger oder dergleichen sein, welche im Verlauf des Arbeitsprozesses verbraucht werden. Das Ausbringen von Saatgut aus einem frontseitig angeordneten Saattank oder von Dünger aus einem Satteltank kann durch eine kontinuierliche Bestimmung des Füllstandes ermittelt werden. Dabei kann der Füllstand beispielsweise durch eine geeignete Sensorik am Saat- oder Düngertank gemessen oder alternativ berechnet oder abgeschätzt werden. Der Verbrauch der Betriebs- und/oder Arbeitsstoffe führt zu einer Gewichtsänderung, welche eine Anpassung der Bremsparameter erforderlich machen kann, um ein optimales Ansprechen des Bremssystems zu gewährleisten.

Zudem kann durch das Steuergerät anhand von hinterlegten Schwellwerten für eine Gewichtsveränderung bestimmt werden, ob zu einer Aktualisierung aufgefordert wird. Hierzu sind die Schwellwerte für eine Gewichtsveränderung vorzugsweise so gewählt, dass eine Aufforderung zur Aktualisierung erst dann generiert wird, wenn sich die Gewichtsveränderung signifikant auf das Bremsverhalten auswirken kann.

Bevorzugt können hierzu in der Speichereinrichtung durch bereits vorgenommene Aktualisierungen hinterlegte Bremsparametersätze abrufbar gespeichert werden. Im laufenden Betrieb des Zugfahrzeugs kommt es in Abhängigkeit vom jeweiligen Einsatzzweck wiederkehrend zur Umrüstung des Zugfahrzeugs, wobei oftmals die gleiche Menge an Ballastgewichten oder die gleiche Arbeitsvorrichtung verwendet werden. Daher ist es vorteilhaft, aus einer Auswahl von bereits hinterlegten Bremsparametersätzen den für die jeweilig durchgeführte Umrüstmaßnahme spezifischen Bremsparametersatz auswählen zu können.

Dabei kann durch das Steuergerät überprüft werden, ob einer durch das Steuergerät bestimmten Gewichtsänderung entsprechende Bremsparametersätze in der Speichereinrichtung bereits hinterlegt sind. Insbesondere bei einer zyklischen Aktualisierung der Bremsparameter mit enger Taktung kann somit auf bereits vorhandene Betriebsparametersätze zurückgegriffen werden. Der Umfang an einzuspielenden Bremsparametersätzen lässt sich auf diese Weise im Laufe der Zeit deutlich reduzieren.

Insbesondere kann dem Steuergerät des Bremssystems Daten von zumindest einer anderen Steuerungsvorrichtung bereitgestellt werden, anhand derer eine Bestimmung einer Gewichtsveränderung durch das Steuergerät vorgenommen wird. Dabei kann es sich um eine übergeordnete Steuerungsvorrichtung des Zugfahrzeugs und/oder eine Steuerungsvorrichtung der Arbeitsvorrichtung handeln. Denkbar ist auch eine Übertagung von Daten durch eine landwirtschaftliche Erntemaschine, die an einem Ernteprozess beteiligt ist. Beispielsweise kann von einer Steuerungsvorrichtung einer als Mähdrescher oder Feldhäcksler ausgeführten Erntemaschine eine in den Anhänger des landwirtschaftlichen Zuges überladene Erntegutmasse an das Steuergerät des Zugfahrzeugs übermittelt werden, so dass die Veränderung des Gewichts des landwirtschaftlichen Zuges aufgrund der Zuladung bei der Bestimmung der Bremsparameter berücksichtigt wird.

Gemäß dem unabhängigen Anspruch 9 wird ein landwirtschaftlicher Zug mit einem Bremssystem vorgeschlagen, wobei der landwirtschaftliche Zug ein Zugfahrzeug, insbesondere einen Traktor, und mindestens ein an das Zugfahrzeug koppelbaren oder gekoppelten Arbeitsvorrichtung mit einer Bremsvorrichtung aufweist, wobei die Arbeitsvorrichtung als mindestens ein Anhänger oder als mindestens ein Arbeitsaggregat ausgebildet ist. Die Arbeitsvorrichtung wird von dem Zugfahrzeug gezogen und mittelbar verzögert. Das Zugfahrzeug umfasst zumindest ein Bodeneingriffsmittel, durch welches eine von zumindest einer Bremsvorrichtung des Zugfahrzeugs hervorgerufene Bremskraft übertragen wird. Erfindungsgemäß ist dem Bremssystem ein Steuergerät mit einer Recheneinheit und einer Speichervorrichtung zugeordnet, in welchem Bremsparameter der zumindest einen Bremsvorrichtung des Zugfahrzeugs in Abhängigkeit von einem ermittelten individuellen Grundgewicht des Zugfahrzeugs hinterlegt sind, wobei das Steuergerät dazu eingerichtet ist, diese Bremsparameter bei einem Abbremsen des Zuges zugrunde zu legen. Insbesondere werden die bestimmten gewichtsspezifischen Bremsparameter zur Ansteuerung der Bremsvorrichtung der Arbeitsvorrichtung herangezogen.

Der erfindungsgemäße landwirtschaftliche Zug ist dadurch gekennzeichnet, dass das Bremssystem zur Durchführung des Verfahrens nach einem der Ansprüche 1 bis 8 eingerichtet ist.

Die vorliegende Erfindung wird nachstehend anhand eines in der Zeichnung dargestellten Ausführungsbeispieles näher erläutert.

Es zeigt:

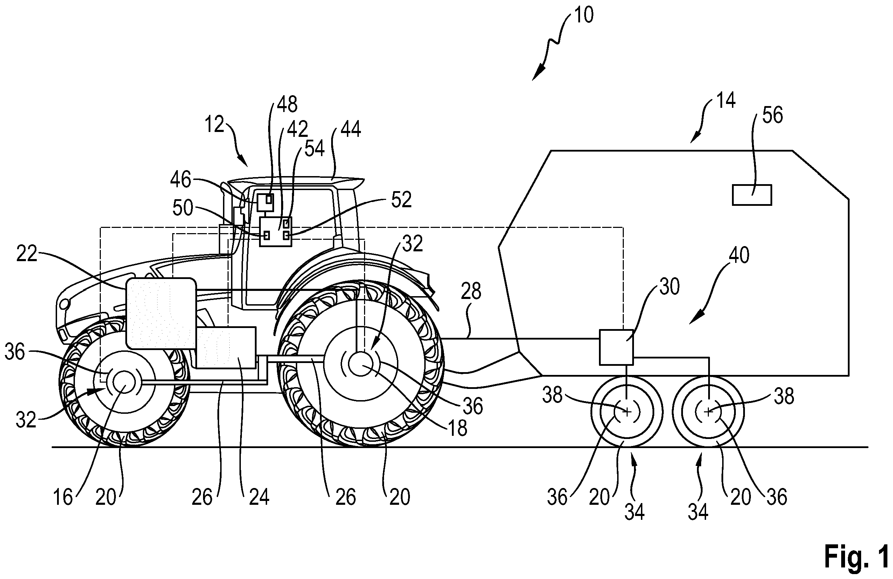

- Fig. 1: eine schematische Ansicht eines vorschlagsgemäßen landwirtschaftlichen Zuges mit einem Zugfahrzeug und einer gezogenen Arbeitsvorrichtung.

In Fig. 1 ist als Beispiel für einen landwirtschaftlichen Zug 10 ein Zugfahrzeug 12 in Form eines Traktors mit einer daran angeordneten gezogenen, auswechselbaren Arbeitsvorrichtung 14, die als Anhänger ausgeführt ist, in einer schematischen Seitenansicht dargestellt. Eine Arbeitsvorrichtung im Sinne der Erfindung kann auch eine Ballenpresse sein. Ein Zugfahrzeug 12 im Sinne der Erfindung kann jede landwirtschaftliche Arbeitsmaschine wie ein Feldhäcksler, ein Mähdrescher oder ein Traktor mit oder ohne angebautem Arbeitsgerät sein. Dabei sind auch angehängte, insbesondere aufgesattelte, auswechselbare Anbaugeräte wie Pflanzenschutzgeräte oder ein Saattank im Sinne der vorliegenden Erfindung als Arbeitsvorrichtung 14 zu verstehen. Das Zugfahrzeug 12 ist gegenüber dem Boden durch jeweils an einer Vorderachse 16 und einer Hinterachse 18 angeordnete Bodeneingriffsmittel 20 in Form von Rädern abgestützt. Die Bodeneingriffsmittel 20 können auch in Form von Raupenlaufwerken ausgebildet sein. Zum Antrieb der Bodeneingriffsmittel 20 und als Energiequelle für die Arbeitsvorrichtung 14 weist das Zugfahrzeug 12 einen Antriebsmotor 22 auf, welcher durch ein Getriebe 24 mit einem Antriebsstrang 26 verbunden ist.

Durch den Antriebsstrang 26 und/oder Antriebsmotor 22 kann regelbar die Antriebsleistung bereitgestellt werden, die beispielsweise für eine Feldbearbeitung und/oder eine Straßenfahrt des Zugfahrzeuges 12 benötigt wird, wobei ein von dem Antriebsmotor 22 erzeugtes Drehmoment über den Antriebsstrang 26 auf die Vorder- und/oder Hinterachse 16, 18 übertragen werden kann.

Um den landwirtschaftlichen Zug 10 zu verzögern, weist das Zugfahrzeug 12 eine erste Bremsvorrichtung 32 und mindestens eine Arbeitsvorrichtung 14 eine zweite Bremsvorrichtung 34 auf. Mehrere Arbeitsvorrichtungen 14 können jeweils eine eigene Bremsvorrichtung aufweisen. Die erste Bremsvorrichtung 32 und die zweite Bremsvorrichtung 34 sind Teil eines Bremssystems 40. Die erste Bremsvorrichtung 32 des Zugfahrzeuges 12 kann eine Betriebsbremse, welche beispielsweise durch Betätigung eines Bremspedals durch den Bediener betätigbar ist, eine Feststellbremse und/oder eine Hilfsbremse umfassen. Die Bremsvorrichtungen 32, 34 können jeweils pneumatisch, hydraulisch, mechanisch und/oder elektrisch wirkende Bremsvorrichtungen sein. Die zweite Bremsvorrichtung 34 der gezogenen Arbeitsvorrichtung 14 umfasst jeweils mindestens eine Bremse 36, welche an auf eine Achse 38 und/oder auf jeweils ein Bodeneingriffsmittel 20 der gezogenen Arbeitsvorrichtung 14 wirkt. Zudem kann die zweite Bremsvorrichtung 34 durch mindestens ein elektronisch ansteuerbares Bremsventil 30 angesteuert werden, wobei das Bremsventil 30 anhängerseitig oder zugfahrzeugseitig angeordnet sein kann. Mittels einer Bremsleitung 28 wird ein zum Bremsen benötigtes Fluid, beispielsweise Druckluft, von dem Zugfahrzeug 12 zu der als Anhänger ausgeführten Arbeitsvorrichtung 14 geleitet. Die in Fig. 1 dargestellte, als Anhänger ausgeführte Arbeitsvorrichtung 14 ist mittels einer Deichsel mit dem Zugfahrzeug 12 verbunden und weist zwei Achsen 38 mit daran angeordneten Bodeneingriffsmitteln 20 auf. An den Achsen 38 ist jeweils mindestens eine Bremse 36 angeordnet, wobei beispielsweise die Achsen 38 und/oder die Bodeneingriffsmittel 20 unabhängig voneinander abbremsbar sind.

Dem Bremssystem 30 ist weiter ein Steuergerät 42 mit einer Recheneinheit 50 und einer Speichervorrichtung 52 zugeordnet. Die zweite Bremsvorrichtung 34 der Arbeitsvorrichtung 14 und die erste Bremsvorrichtung 32 des Zugfahrzeuges 12 sind jeweils mit dem Steuergerät 42 des Zugfahrzeuges 12 zur Steuerung und/oder Regelung der Bremsvorrichtungen 32, 34 verbunden. Das Steuergerät 42 steht mit einer in einer Fahrerkabine 44 des Zugfahrzeuges 12 angeordneten Steuerungsvorrichtung 46 in Verbindung, welche über eine Bedieneinheit 48 zur Ein- und Ausgabe von Daten verfügt. Für das Ansteuern der ersten und zweiten Bremsvorrichtung 32, 34 sind in der Speichervorrichtung 52 Bremsparameter hinterlegt.

Zur Erfüllung gesetzlicher Regelungen hinsichtlich technischer Anforderungen an das Bremssystem eines landwirtschaftlichen Zuges ist es grundsätzlich vorgesehen, die Bremsparameter einer Arbeitsvorrichtung so zu definieren, dass die Bremsparameter der Arbeitsvorrichtung einen Gewichtsbereich für unterschiedliche Zugfahrzeuge abdecken. Der Gewichtsbereich umfasst dabei von verschiedenen Zugfahrzeugen das jeweilige Grundgewicht in unbeladenem Zustand. Die definierten Bremsparameter der Arbeitsvorrichtung sind daher nicht optimal gewählt, da diese für eine Vielzahl von Zugfahrzeugen mit unterschiedlichem Grundgewicht Gültigkeit haben müssen. Entsprechendes gilt für den beladenen Zustand der Zugfahrzeuge.

Vor diesem Hintergrund sieht das erfindungsgemäß ein Verfahren zum Betreiben des Zuges 10 vor, dass die Bremsparameter der zumindest einen Betriebsbremse 32 des Zugfahrzeugs 12 in Abhängigkeit von einem ermittelten individuellen Grundgewicht des Zugfahrzeugs 12 vorgegeben und in dem Steuergerät 42 des Bremssystems 40 hinterlegt werden, wobei diese Bremsparameter beim Abbremsen des landwirtschaftlichen Zuges 10 als Ganzem zugrunde gelegt werden. Insbesondere werden die Bremsparameter des Zugfahrzeugs 12 zur Ansteuerung der zweiten Bremsvorrichtung 34 der Arbeitsvorrichtung 14 verwendet. Dadurch wird die Charakteristik der zweiten Bremsvorrichtung 34 an die der ersten Bremsvorrichtung 32 angepasst, was zu einer Reduzierung des Verschleißes der Betriebsbremse 32 führt.

Hierzu werden die Bremsparameter der Betriebsbremse 32 aufgrund eines initial durchgeführten Wiegevorganges zum Abschluss eines Fertigungsprozesses des Zugfahrzeugs 12 bestimmt und in der Speichervorrichtung 52 des Steuergerätes 42 hinterlegt. Das Grundgewicht des Zugfahrzeugs 12 berücksichtigt dabei auch innerhalb einer Baureihe abweichende Ausstattungsvarianten, so dass individuelle gewichtsspezifische Bremsparameter in dem Steuergerät 42 hinterlegt werden, die bei einer Bildung des landwirtschaftlichen Zuges 10 auch als Bremsparameter der zweiten Bremsvorrichtung 34 der Arbeitsvorrichtung 14 verwendet werden. Auf diese Weise lässt sich insbesondere einem erhöhten Verschleiß der Betriebsbremse 32 begegnen.

Gemäß dem Verfahren ist vorgesehen, dass durch das Steuergerät 42 nach initialer Hinterlegung der Bremsparameter zyklisch zu einer Überprüfung der Bremsparameter aufgefordert wird. Dies kann jeweils im Anschluss an eine Inbetriebnahme des Zugfahrzeugs 12 erfolgen. Auf diese Weise soll gewährleistet werden, dass Änderungen des Grundgewichts des Zugfahrzeugs 12 oder des landwirtschaftlichen Zuges 10 berücksichtigt werden.

Die Aktualisierung der Bremsparameter kann hierzu manuell durch einen Benutzereingriff durchgeführt werden. Hierzu kann eine Bedienperson mittels der Bedieneinheit 48 Daten eingeben, welche das geänderte Grundgewicht betreffen, um auf dieser Grundlage an das geänderte Grundgewicht angepasste Bremsparameter zu bestimmen. Hierzu kann mittels eines in der Speichervorrichtung 52 hinterlegten Algorithmus, der von der Recheneinheit 50 ausgeführt wird, ein angepasster gewichtsspezifischer Parametersatz für Bremsparameter bestimmt werden. Darüber hinaus kann die Bedieneinheit 48 eine Kommunikationsschnittstelle 54 für einen Datentransfer aufweisen, mittels derer Parametersätze mit gewichtsspezifischen Bremsparametern auf das Steuergerät 42 übertragen werden.

Denkbar ist auch, dass eine automatische Aktualisierung der Bremsparameter zyklisch durch das Steuergerät 42 durchgeführt wird. Hierzu können dem Steuergerät 42 Informationen von zumindest einer anderen Steuerungsvorrichtung 46, 56 des landwirtschaftlichen Zuges 10 bereitgestellt werden, anhand derer eine Bestimmung einer Gewichtsveränderung durch das Steuergerät 42 vorgenommen wird. Dabei kann es sich um eine übergeordnete Steuerungsvorrichtung 46 des Zugfahrzeugs 12 und/oder eine Steuerungsvorrichtung 56 der Arbeitsvorrichtung 14 handeln. Die von der zumindest einen anderen Steuerungsvorrichtung bereitgestellten Informationen betreffen insbesondere das Um- oder Aufrüsten des Zugfahrzeugs 12 oder den Wechsel der Arbeitsvorrichtung 14.

Von dem Steuergerät 42 wird während des laufenden Betriebs des Zugfahrzeugs 12 ein adaptiver Zyklus zur Aktualisierung vorgegeben wird, dessen Taktung eine Berücksichtigung einer kontinuierlichen Gewichtsveränderung während eines Arbeitsprozesses ermöglicht. Eine Anpassung des Zyklus ist durch eine entsprechende Einstellung der Bedienperson mittels der Bedieneinheit 48 möglich. Neben Gewichtsveränderungen, die auf das Um- oder Aufrüsten des Zugfahrzeugs 12 zurückzuführen sein können, kommt es im laufenden Betrieb des Zuges 10 zu Gewichtsänderungen, die auf Veränderungen verschiedener Maschinenparameter beruhen. Maschinenparameter sind unter anderem mitgeführte Betriebs- und/oder Arbeitsstoffe, beispielsweise Kraftstoff, Saatgut, Dünger oder dergleichen, welche im Verlauf des Arbeitsprozesses verbraucht werden. Das Ausbringen von Saatgut aus einem frontseitig angeordneten Saattank oder von Dünger aus einem Satteltank kann durch eine kontinuierliche Bestimmung des Füllstandes ermittelt werden. Dabei kann der Füllstand beispielsweise durch eine geeignete Sensorik an dem Saat- oder Düngertank gemessen oder alternativ berechnet oder abgeschätzt werden. Der Verbrauch der Betriebs- und/oder Arbeitsstoffe führt zu einer Gewichtsänderung, welche eine Anpassung der Bremsparameter erforderlich machen kann, um ein optimales Ansprechen des Bremssystems 40 zu gewährleisten.

Bei einer als Transportfahrzeug ausgeführten Arbeitsvorrichtung 14 ist es in der Regel so, dass im Verlauf eines Ernteprozesses das Transportfahrzeug gefüllt wird, was zu einer Gewichtsänderung des Zuges 10 führt. Um eine gewichtsspezifische Anpassung der Bremsparameter vornehmen zu können, wird von einer Steuerungsvorrichtung einer an dem Ernteprozess beteiligten Erntemaschine, wie einem Feldhäcksler oder Mähdrescher, die Masse an Erntegut, die auf die als Transportfahrzeug ausgeführte Arbeitsvorrichtung 14 überladen wurde, an das Steuergerät 42 übermittelt. Die Übermittlung dieser Information führt dazu, dass durch das Steuergerät 42 eine Aktualisierung der Bremsparameter angefordert wird.

Durch das Steuergerät 42 kann anhand von hinterlegten Schwellwerten für eine Gewichtsveränderung bestimmt werden, ob zu einer Aktualisierung aufgefordert beziehungsweise eine Aktualisierung automatisiert durchgeführt werden muss. Dadurch wird der Aufwand für eine Aktualisierung von Bremsparametern auf ein notwendiges Maß reduziert.

In der Speichereinrichtung 52 durch bereits vorgenommene Aktualisierungen hinterlegte Bremsparametersätze werden abrufbar gespeichert, so dass diese nach einer erfolgten Um- oder Aufrüstung zur Verfügung stehen, ohne eine erneute Bestimmung vornehmen zu müssen. Durch das Steuergerät 42 wird hierzu überprüft, ob einer durch das Steuergerät 42 bestimmten Gewichtsänderung entsprechende Bremsparametersätze in der Speichereinrichtung 52 bereits hinterlegt sind.

### Bezugszeichenliste

- 10: Landwirtschaftlicher Zug
- 12: Zugfahrzeug
- 14: Gezogene Arbeitsvorrichtung
- 16: Vorderachse
- 18: Hinterachse
- 20: Bodeneingriffsmittel
- 22: Antriebsmotor
- 24: Getriebe
- 26: Antriebsstrang
- 28: Bremsleitung
- 30: Bremsventil
- 32: Erste Bremsvorrichtung
- 34: Zweite Bremsvorrichtung
- 36: Bremse
- 38: Achse
- 40: Bremssystem
- 42: Steuergerät
- 44: Fahrerkabine
- 46: Steuerungsvorrichtung
- 48: Bedieneinheit
- 50: Recheneinheit
- 52: Speichereinrichtung
- 54: Kommunikationsschnittstelle
- 56: Steuerungsvorrichtung

## Patentansprüche

1. Verfahren zum Betreiben eines landwirtschaftlichen Zuges (10) mit einem Bremssystem (40), wobei der landwirtschaftliche Zug (10) ein Zugfahrzeug (12), insbesondere einen Traktor, aufweist, wobei das Zugfahrzeug (12) zumindest ein Bodeneingriffsmittel (20) umfasst, durch welches eine von zumindest einer Bremsvorrichtung (32) des Bremssystems (40) hervorgerufene Bremskraft übertragen wird, und einer an das Zugfahrzeug (12) ankoppelbaren oder angekoppelten Arbeitsvorrichtung (14) mit einer Bremsvorrichtung (34), wobei die Arbeitsvorrichtung (14) als mindestens ein Anhänger oder als mindestens ein Arbeitsaggregat ausgebildet ist, die von dem Zugfahrzeug (12) gezogen und mittelbar verzögert wird, wobei als Bremsparameter Bremsdrücke der zumindest einen Bremsvorrichtung (32) des Zugfahrzeugs (12) in Abhängigkeit von einem ermittelten individuellen Grundgewicht des Zugfahrzeugs (12) vorgegeben und in einem Steuergerät (42) des Bremssystems (40) hinterlegt werden, wobei diese Bremsparameter dem Abbremsen des landwirtschaftlichen Zuges (10) zugrunde gelegt werden,
**dadurch gekennzeichnet, dass**
die Bremsparameter aufgrund eines initial durchgeführten Wiegevorganges zum Abschluss eines Fertigungsprozesses des Zugfahrzeugs (12) bestimmt und in einer Speichervorrichtung (52) des Steuergerätes (42) hinterlegt werden, wobei durch das Steuergerät (42) nach initialer Hinterlegung der Bremsparameter zyklisch zu einer Überprüfung der Bremsparameter aufgefordert wird.

2. Verfahren nach Anspruch 1, **dadurch gekennzeichnet, dass** eine Aktualisierung der Bremsparameter manuell durch einen Benutzereingriff durchgeführt wird.

3. Verfahren nach Anspruch 1, **dadurch gekennzeichnet, dass** eine automatische Aktualisierung der Bremsparameter zyklisch durch das Steuergerät (42) durchgeführt wird.

4. Verfahren nach der vorangehenden Ansprüche, **dadurch gekennzeichnet, dass** während des laufenden Betriebs des Zugfahrzeugs (12) von dem Steuergerät (42) ein adaptiver Zyklus zur Aktualisierung vorgegeben wird, dessen Taktung eine Berücksichtigung einer kontinuierlichen Gewichtsveränderung während eines Arbeitsprozesses ermöglicht.

5. Verfahren nach einem der vorangehenden Ansprüche, **dadurch gekennzeichnet, dass** durch das Steuergerät (42) anhand von hinterlegten Schwellwerten für eine Gewichtsveränderung bestimmt wird, ob zu einer Aktualisierung aufgefordert wird.

6. Verfahren nach einem der vorangehenden Ansprüche, **dadurch gekennzeichnet, dass** in der Speichereinrichtung (52) durch bereits vorgenommene Aktualisierungen hinterlegte Bremsparametersätze abrufbar gespeichert werden.

7. Verfahren nach Anspruch 6, **dadurch gekennzeichnet, dass** durch das Steuergerät (42) überprüft wird, ob einer durch das Steuergerät (42) bestimmten Gewichtsänderung entsprechende Bremsparametersätze in der Speichereinrichtung (52) bereits hinterlegt sind.

8. Verfahren nach einem der vorangehenden Ansprüche, **dadurch gekennzeichnet, dass** dem Steuergerät (42) Daten von anderen Steuerungsvorrichtungen (46, 56) bereitgestellt werden, anhand derer eine Bestimmung einer Gewichtsveränderung durch das Steuergerät (42) vorgenommen wird.

9. Landwirtschaftlicher Zug (10) mit einem Bremssystem (40), wobei der landwirtschaftliche Zug (10) ein Zugfahrzeug (12), insbesondere einen Traktor, und mindestens einem an das Zugfahrzeug (12) koppelbaren oder gekoppelten Arbeitsvorrichtung (14) mit einer Bremsvorrichtung (34) aufweist, wobei die Arbeitsvorrichtung (14) als mindestens ein Anhänger oder als mindestens ein Arbeitsaggregat ausgebildet ist, die von dem Zugfahrzeug (12) gezogen und mittelbar verzögert wird, wobei das Zugfahrzeug (12) zumindest ein Bodeneingriffsmittel (20) umfasst, durch welches eine von zumindest einer Bremsvorrichtung (32) des Zugfahrzeugs (12) hervorgerufene Bremskraft übertragen wird, wobei
dem Bremssystem (40) ein Steuergerät (42) mit einer Recheneinheit (50) und einer Speichervorrichtung (52) zugeordnet ist, in welchem als Bremsparameter Bremsdrücke der zumindest einen Bremsvorrichtung (32) des Zugfahrzeugs (12) in Abhängigkeit von einem ermittelten individuellen Grundgewicht des Zugfahrzeugs (12) hinterlegt sind, wobei das Steuergerät (42) dazu eingerichtet ist, diese Bremsparameter dem Abbremsen des Zuges (10) zugrunde zu legen, **dadurch gekennzeichnet, dass** die Bremsparameter aufgrund eines initial durchgeführten Wiegevorganges zum Abschluss eines Fertigungsprozesses des Zugfahrzeugs (12) bestimmt und in der Speichervorrichtung (52) des Steuergerätes (42) hinterlegt werden, wobei durch das Steuergerät (42) nach initialer Hinterlegung der Bremsparameter zyklisch zu einer Überprüfung der Bremsparameter aufgefordert wird.

10. Landwirtschaftlicher Zug (10) nach Anspruch 9, **dadurch gekennzeichnet, dass** das Bremssystem (40) zur Durchführung des Verfahrens nach einem der Ansprüche 1 bis 8 eingerichtet ist.

## Claims

1. A method for operating an agricultural vehicle-trailer combination (10) with a brake system (40), wherein the agricultural vehicle-trailer combination (10) has a traction vehicle (12), in particular a tractor, wherein the traction vehicle (12) comprises at least one ground engaging means (20) through which a braking force elicited by at least one brake device (32) of the brake system (40) is transmitted, and a working device (14) with a brake device (34) which can be coupled to or is coupled to the traction vehicle (12), wherein the working device (14) is configured as at least one trailer or as at least one working assembly which is drawn and indirectly decelerated by the traction vehicle (12), wherein brake pressures for the at least one brake device (32) of the traction vehicle (12) are specified as a function of a determined individual basic weight of the traction vehicle (12) and stored in a control device (42) of the brake system (40) as brake parameters, wherein these brake parameters form the basis of the braking of the agricultural vehicle-trailer combination (10),
**characterized in that**
the brake parameters are determined on the basis of an initial weighing procedure carried out at the conclusion of a process for the preparation of the traction vehicle (12) and stored in a storage device (52) of the control device (42), wherein, after initial storage of the brake parameters, a request for a cyclic review of the brake parameters is made by the control device (42).

2. The method according to claim 1, **characterized in that** an update of the brake parameters is carried out manually by means of a user intervention.

3. The method according to claim 1, **characterized in that** an automatic update of the brake parameters is carried out cyclically by the control device (42).

4. The method according to the preceding claims, **characterized in that** during the ongoing operation of the traction vehicle (12), an adaptive cycle for updating is specified by the control device (42) the timing of which enables a continuous variation in weight during an working process to be taken into account.

5. The method according to one of the preceding claims, **characterized in that** a determination can be made by the control device (42) on the basis of stored threshold values for a variation in weight as to whether an update is to be requested.

6. The method according to one of the preceding claims, **characterized in that** sets of brake parameters stored during updates which have already been carried out are retrievably stored in the storage device (52).

7. The method according to claim 6, **characterized in that** a check is carried out by the control device (42) as to whether a set of brake parameters corresponding to a variation in weight determined by the control device (42) has already been stored in the storage device (52).

8. The method according to one of the preceding claims, **characterized in that** data from other control means (46, 56) are provided to the control device (42), with the aid of which a determination of a variation in weight is undertaken by the control device (42).

9. An agricultural vehicle-trailer combination (10) with a brake system (40), wherein the agricultural vehicle-trailer combination (10) has a traction vehicle (12), in particular a tractor, and at least one working device (14) with a brake device (34) which can be coupled to or is coupled to the traction vehicle (12), wherein the working device (14) is configured as at least one trailer or as at least one working assembly which can be drawn and indirectly decelerated by the traction vehicle (12), wherein the traction vehicle (12) comprises at least one ground engaging means (20) through which a braking force elicited by at least one brake device (32) of the traction vehicle (12) is transmitted, wherein a control device (42) with a processing unit (50) and a storage device (52) is associated with the brake system (40), in which processing unit brake pressures for the at least one brake device (32) of the traction vehicle (12) are stored as brake parameters as a function of a determined individual basic weight of the traction vehicle (12), wherein the control device (42) is configured to base the braking of the vehicle-trailer combination (10) on these brake parameters, **characterized in that** the brake parameters are determined on the basis of an initial weighing procedure which is carried out at the conclusion of a process for the preparation of the traction vehicle (12) and stored in the storage device (52) of the control device (42), wherein after initial storage of the brake parameters, a cyclic review of the brake parameters is requested by the control unit (42).

10. An agricultural vehicle-trailer combination (10) according to claim 9, **characterized in that** the brake system (40) is configured to carry out the method according to one of claims 1 to 8.

## Revendications

1. Procédé de fonctionnement d'un attelage agricole (10) comprenant un système de freinage (40), l'attelage agricole (10) comportant un véhicule de traction (12), en particulier un tracteur, le véhicule de traction (12) incluant au moins un moyen de prise au sol (20) par l'intermédiaire duquel une force de freinage provoquée par au moins un dispositif de freinage (32) du système de freinage (40) est transmise, et comprenant un dispositif de travail (14) couplable ou couplé au véhicule de traction (12) avec un dispositif de freinage (34), le dispositif de travail (14) étant conformé en au moins une remorque ou en au moins un organe de travail qui est tracté et ralenti indirectement par le véhicule de traction (12), comme paramètres de freinage étant prescrites des pressions de freinage du au moins un dispositif de freinage (32) du véhicule de traction (12) en fonction d'un poids de base individuel déterminé du véhicule de traction (12) et enregistrées dans un appareil de commande (42) du système de freinage (40), ces paramètres de freinage étant pris comme base pour le freinage de l'attelage agricole (10), **caractérisé en ce que** les paramètres de freinage sont déterminés sur la base d'une opération de pesée effectuée initialement à la fin d'un processus de fabrication du véhicule de traction (12) et enregistrés dans un dispositif de mémoire (52) de l'appareil de commande (42), le paramètre de freinage étant demandé cycliquement pour vérification par l'intermédiaire de l'appareil de commande (42) après un enregistrement initial des paramètres de freinage.

2. Procédé selon la revendication 1, **caractérisé en ce qu'**une actualisation des paramètres de freinage est effectuée manuellement par l'intermédiaire d'une intervention de l'utilisateur.

3. Procédé selon la revendication 1, **caractérisé en ce qu'**une actualisation automatique des paramètres de freinage est effectuée cycliquement par l'intermédiaire de l'appareil de commande (42) .

4. Procédé selon les revendications précédentes, **caractérisé en ce que** pendant le fonctionnement du véhicule de traction (12) est prescrit par l'appareil de commande (42) un cycle adaptatif d'actualisation dont le cadencement permet la prise en compte d'une variation pondérale continue pendant un processus de travail.

5. Procédé selon une des revendications précédentes, **caractérisé en ce que** par l'intermédiaire de l'appareil de commande (42) est déterminé, à l'aide de valeurs de seuil enregistrées pour une variation pondérale, si une actualisation est requise.

6. Procédé selon une des revendications précédentes, **caractérisé en ce que** dans l'agencement de mémoire (52) sont mémorisés de manière consultable des jeux de paramètres enregistrés par l'intermédiaire d'actualisations déjà effectuées.

7. Procédé selon la revendication 6, **caractérisé en ce que** par l'intermédiaire de l'appareil de commande (42) est contrôlé si des jeux de paramètres correspondant à une variation pondérale déterminée par l'intermédiaire de l'appareil de commande (42) sont déjà enregistrés dans l'agencement de mémoire (52).

8. Procédé selon une des revendications précédentes, **caractérisé en ce qu'**à l'appareil de commande (42) sont fournies, par d'autres dispositifs de commande (46, 56), des données à l'aide desquelles une détermination d'une variation pondérale est effectuée par l'intermédiaire de l'appareil de commande (42).

9. Attelage agricole (10) comprenant un système de freinage (40), l'attelage agricole (10) comportant un véhicule de traction (12), en particulier un tracteur, et comprenant au moins un dispositif de travail (14) couplable ou couplé au véhicule de traction (12) avec un dispositif de freinage (34), le dispositif de travail (14) étant conformé en au moins une remorque ou en au moins un organe de travail qui est tracté et ralenti indirectement par le véhicule de traction (12), le véhicule de traction (12) incluant au moins un moyen de prise au sol (20) par l'intermédiaire duquel une force de freinage provoquée par au moins un dispositif de freinage (32) du véhicule de traction (12) est transmise, au système de freinage (40) étant associé un appareil de commande (42) avec une unité de calcul (50) et un dispositif de mémoire (52) dans lequel sont enregistrées, comme paramètres de freinage, des pressions de freinage du au moins un dispositif de freinage (32) du véhicule de traction (12) en fonction d'un poids de base individuel déterminé du véhicule de traction (12), l'appareil de commande (42) étant agencé pour prendre ces paramètres de freinage comme base pour le freinage de l'attelage (10), **caractérisé en ce que** les paramètres de freinage sont déterminés sur la base d'une opération de pesée effectuée initialement à la fin d'un processus de fabrication du véhicule de traction (12) et enregistrés dans le dispositif de mémoire (52) de l'appareil de commande (42), le paramètre de freinage étant demandé cycliquement pour vérification par l'intermédiaire de l'appareil de commande (42) après un enregistrement initial des paramètres de freinage.

10. Attelage agricole (10) selon la revendication 9, **caractérisé en ce que** le système de freinage (40) est agencé pour réaliser le procédé selon une des revendications 1 à 8.
